# EUROPEAN PATENT SPECIFICATION

(11) **EP 0 214 805 B1**
(45) Date of publication and mention of the grant of the patent: **26.05.1993**
(21) Application number: 86306571.0
(22) Date of filing: 26.08.1986
(51) Int. Cl.: G01N 27/00

(54) **Sensor using a field effect transistor and method of fabricating the same**
Einen Feldeffekttransistor benutzender Fühler und dessen Herstellungsverfahren
Capteur utilisant un transistor à effet de champ et méthode pour le fabriquer

(30) Priority: 29.08.1985 JP 190772/85; 29.08.1985 JP 190776/85
(43) Date of publication of application: 18.03.1987
(73) Proprietor: MATSUSHITA ELECTRIC INDUSTRIAL CO., LTD., Kadoma-shi, Osaka-fu, 571 (JP)
(72) Inventor: Ogawa, Kazufumi, Hirakata Osaka 573 (JP)
(74) Representative: Spencer, Graham Easdale

(56) References cited:
- US-A- 3 831 432
- US-A- 4 020 830
- US-A- 4 238 757
- PATENT ABSTRACTS OF JAPAN, vol. 10, no. 119 (P-453)[2176], 6th May 1986; & JP-A-60 247 151 (FUJITSU K.K.) 06-12-1985
- PATENT ABSTRACTS OF JAPAN, vol. 9, no. 79 (P-347)[1802], 9th April 1985; & JP-A-59 210 356 (KURARAY K.K.) 29-11-1984

## Description

This invention is concerned with a sensor comprising a field effect transistor having a gate electrode and a sensing material fixed to the gate electrode.

Sensors comprising field effect transistors (FET) are used as pH sensors, sensors of various ions, bio-sensors, and for other purposes. Known bio-sensors, for example, typically comprise glass electrodes having proteins or enzymes fixed to their surface or FETs having gate electrodes with proteins or enzymes fixed thereto. The known methods of bonding proteins or enzymes to such surfaces comprise directly applying the protein or enzyme to the surface; or mixing the protein or enzyme with a resin and applying the mixture to the surface; or bonding the protein or enzyme to resin particles which are then applied to the surface; or bonding the protein or resin by means of an organic film.

These methods are not generally satisfactory and the sensitivity of the resulting sensors is not high.

Thus, in the first method referred to, the direct application method, the protein or enzyme tends to become detached during use of the sensor and the durability of the sensor is not adequate. In the second, third and fourth methods, the protein or enzyme becomes partially deactivated so that the sensitivity of the sensor is inadequate.

Known sensors of these various kinds are described in U.S. Patents 3,831,432 and 4,020,830 and Japanese Patent 59210356.

It is an object of this invention, therefore, to provide a sensor comprising an FET having a gate electrode and a sensing material fixed to the gate electrode in which the sensing material is firmly bonded and retains its activity.

According to one aspect of the present invention, there is provided a sensor comprising a field effect transistor having a gate electrode and a sensing material fixed to the gate electrode, characterised in that the gate electrode surface has a reactive monomolecular film or a thin film of a photosensitive hydrophilic polymer directly thereon and the sensing material is bonded to the film by means of Schiffs base or CNBr induced bonding whereby the sensing material retains its activity.

According to another aspect of the invention, there is provided a method of making a sensor which comprises forming a field effect transistor having a gate electrode on a semiconductor substrate and fixing a sensing material to the gate electrode, characterised by the steps of:
- forming a photoresist layer on said semiconductor substrate except on the portion of said gate electrode;
- forming a reactive monomolecular film on the surface of said gate electrode, said reactive monomolecular film being formed by means of a silane surface active agent comprising a reactive group;
- converting the reactive groups of said silane surface active agent into hydroxyl groups;
- converting the hydroxyl groups into aldehyde groups;
- fixing a sensing material which is a protein or enzyme to the aldehyde groups by means of Schiffs base or CNBr induced bonding; and
- removing said photoresist layer.

In a modification of this method, instead of using a photoresist layer to form the monomolecular film on the gate electrode, the monomolecular film is formed all over the substrate of said semiconductor surface and is exposed, except that part on the gate electrode area, to an energy beam which deactivates said reactive monomolecular film.

In a further modification of the method according to the invention, instead of forming a monomolecular film on the gate electrode, a thin film of a photosensitive hydrophilic polymer is formed on said semiconductor substrate;
- said thin film of a photosensitive hydrophilic polymer is removed from said semiconductor substrate except at the portion on said gate electrode by using a mask having an opening which corresponds to said gate electrode;
- the hydrophilic groups of said polymer are converted into aldehyde groups and the latter are reacted with the sensing material, or the hydrophilic groups of said polymer are reacted with cyanobromide and then with the sensing material.

In order that the invention may be more fully understood, preferred embodiments of sensors and their production will now be described, by way of example, with reference to the accompanying drawings, in which:
Fig. 1 to Fig. 7 are diagrammatic sections, on an enlarged scale, through a portion of a sensor showing various stages in its production, Fig. 3 to Fig. 6 showing on a molecular scale the disposition and chemical conversions of a monomolecular film forming part of the sensor;
Fig. 8 is a diagrammatic representation, on a molecular scale, of a monomolecular film according to the second embodiment of the invention; and
Fig. 9 to Fig. 12 are diagrammatic sections, on an enlarged scale, through a portion of a third embodiment of sensor showing various stages in its production.

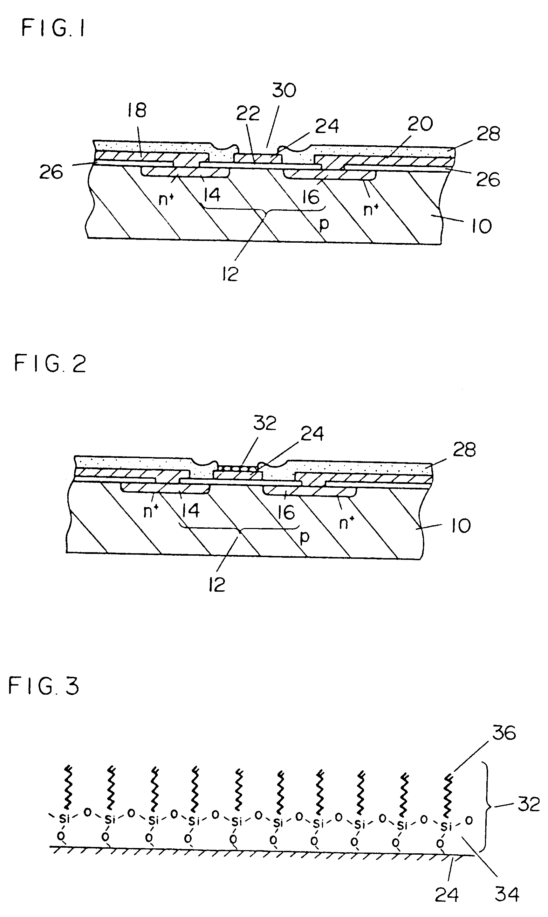

Referring to Figs. 1-7, a first embodiment of sensor is made by first forming an FET 12 on a p-type semiconductor substrate 10. The FET 12 is formed in a conventional manner and it comprises n⁺ type source, drain regions 14, 16, source, drain electrodes 18, 20, gate oxide film 22, gate electrode 24, and insulation film 26. The semiconductor substrate 10 on which the FET 12 is formed is covered with a resist layer 28 and only the resist on gate electrode 24 is exposed, developed and removed to form an opening 30 (Fig. 1).

A reactive monomolecular film is then formed through the opening 30 with a compound comprising a straight hydrocarbon chain with a vinyl or acetylene group at one end and a chlorosilane group at the other end (the chlorosilane derivative). A compound of this kind may, for example, be represented by the formula:

CH₂=CH-(CH₂)ₙ-SiCl₃

where n is an integer of up to 25, preferably of from 10 to 20, and the vinyl groups may be replaced by a CH≡C- group.

The monomolecular film 32 of the chlorosilane derivative is formed by a chemical adsorption process (Fig.2).

The metal oxide surface of the gate electrode 24 and the chlorosilane groups of the chlorosilane derivative selectively react with each other to form a monomolecular film of the formula:

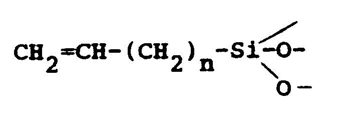

The film may be formed, for example, by dipping the FET 12 for 2 or 3 minutes into a solution of the chlorosilane derivative in a mixture of 80% n-hexane, 12% carbon tetrachloride and 8% chloroform, the solution containing from 2.0 x 10⁻³ to 5.0 x 10⁻² mol/litre of the chlorosilane derivative.

The spatial arrangement of the monomolecular film 32 is shown diagrammatically in Fig. 3; it will be seen that the film is bonded to the metal oxide of the gate electrode 24 by a bond 34 of the formula 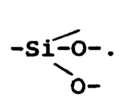
The vinyl groups 36 of the chlorosilane derivative are arranged in an orderly manner on the free surface of the monomolecular film 32.

The resist pattern 28 (Figs. 1 and 2) is then removed and the substrate bearing the monomolecular film 32 is dipped into a 1 mol/litre solution of dibolan in tetrahydrofuran at room temperature and then into an aqueous solution containing 0.1 mol/litre of NaOH and 30% H₂O₂ in order to add hydroxyl groups 38 to the vinyl groups 36 (or acetylene groups) on the surface of the monomolecular film 32.

The substrate is then dipped into an aqueous periodate solution which oxidises the -OH groups to aldehyde groups 40 (Fig. 5) in accordance with equation (1):

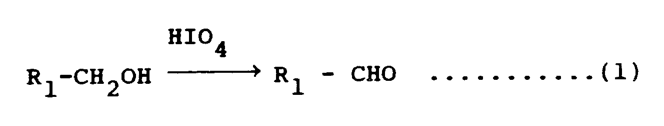

A protein or enzyme having a desired specific activity is then fixed to the film 32 by the reaction shown in equation (2): 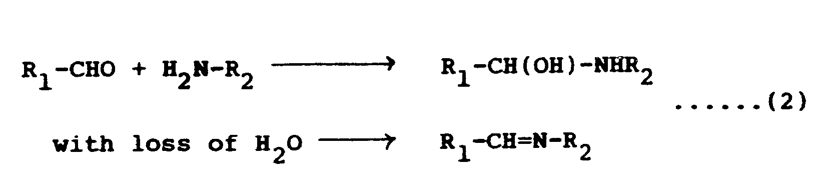
where R₂-NH₂ is a protein or enzyme.

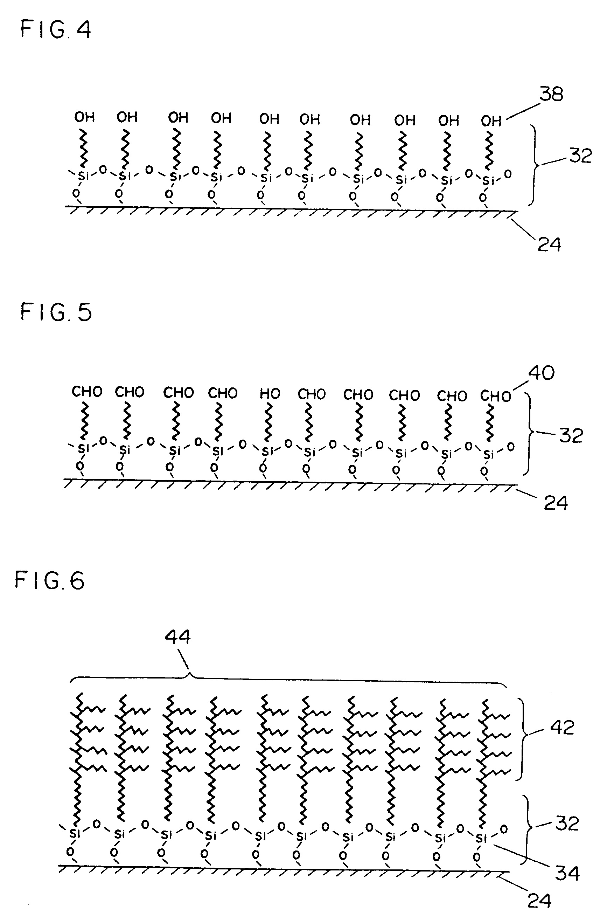

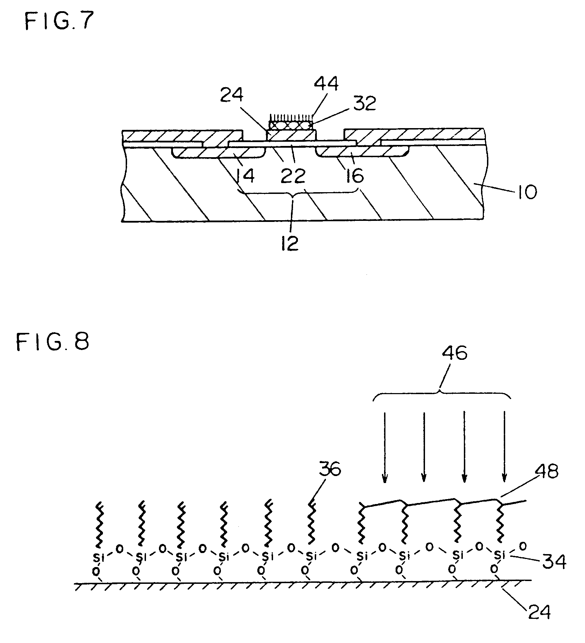

The resulting product is shown diagrammatically in Figs. 6 and 7. Fig. 6 shows the protein or enzyme 42 chemically linked to monomolecular film 32 and Fig. 7 shows the sensor having the protein or enzyme sensing material 44 bonded thereto.

The coated substrate is then diced and the appropriate electrodes attached thereto to complete the production of the bio-sensor.

In the above-described process, the aldehyde method of linking the protein or enzyme was used, but the latter may also be fixed by a cyanobromide method as shown in equation (3):

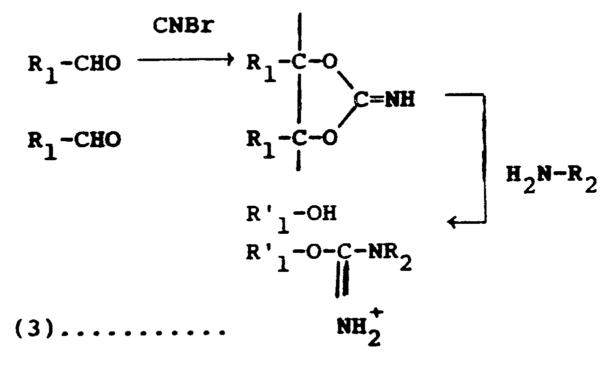

The monomolecular film can also be formed on the gate electrode by the Langmuir-Blodgett (LB) method using CH₂=CH-(CH₂) 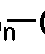 COOH, CH≡C-(CH₂) 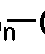 COOH or the like.

In the above example the monomolecular film was formed only on the gate electrode by using the resist 28, but the same effect can be obtained by forming a chlorosilane derivative film 34,36 all over the surface of the substrate (see Fig. 8) and then polymerising the vinyl or acetylene groups in all areas except that of the gate electrode by exposure to an energy beam 46 (which is such as to cause polymerisation of said groups). This has the effect of deactivating the vinyl or acetylene groups in all areas 48 other than the gate electrode area. The vinyl or acetylene groups in the gate electrode are then converted into the carbinol groups as previously described (Fig.4).

The procedures described lead to firm binding of the protein or enzyme to the substrate with no loss of activity. Bio-sensors of good sensitivity and reliability are, therefore, obtained. The procedure can be carried out easily so that the production costs are low.

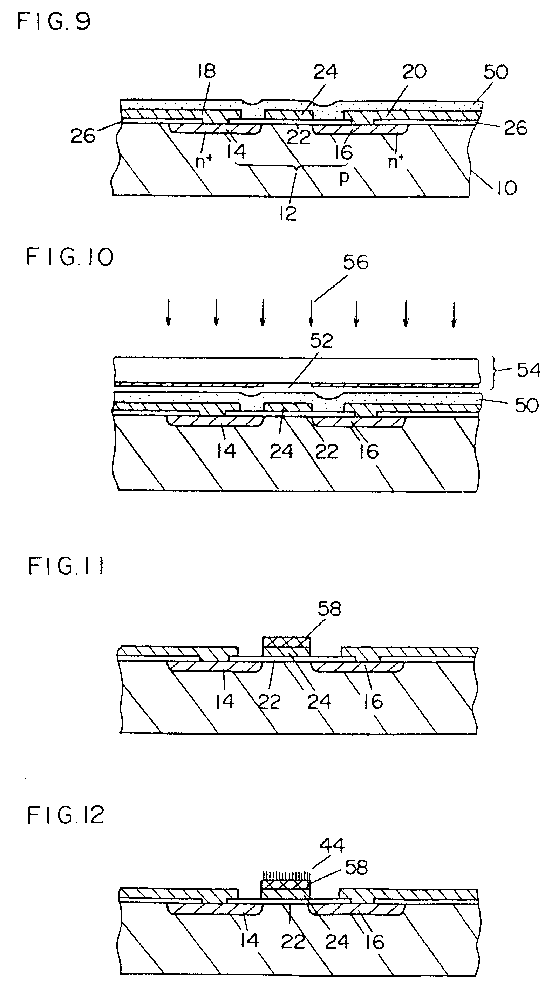

A third embodiment of sensor and its method of production are shown in Figs. 9 to 12. Referring to Fig. 9, a substrate 10 bearing an FET 12 having the same features as that of Fig. 1 is coated with a thin film 50 of a photosensitive hydrophilic polymer. The film 50 is formed by spin coating the substrate with an aqueous solution of the polymer, for example a solution of 10g of pullulan having a molecular weight of 200,000 and 1g of ammonium dichromate in 100cc of water. The film 50 has a thickness of about 0.5 µm. Using a photo mask having a desired pattern, for example a photomask 54 having an opening 52 corresponding to and aligned with the gate electrode 24, the film is exposed to light 56 (Fig.10) and developed to leave a hydrophilic polymer film pattern 58 selectively on the gate electrode (Fig.11).

The coated substrate is then dipped in an aqueous periodate solution to oxidise the surface -OH groups to aldehyde groups in accordance with equation (4):

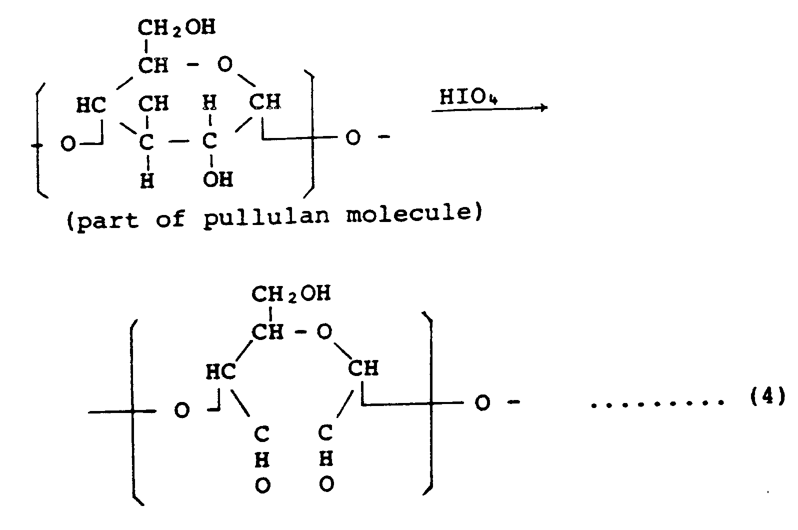

A protein or enzyme having a desired specific activity is then reacted with the CHO group- containing film in accordance with equation (2) above. The coated substrate is then diced and appropriate electrodes are attached thereto to complete the production of the bio-sensor.

In the process just described, chemical bonding of the protein or enzyme was by the aldehyde reaction, but the protein or enzyme can be equally bound by using a cyanobromide procedure as shown in equation (6):

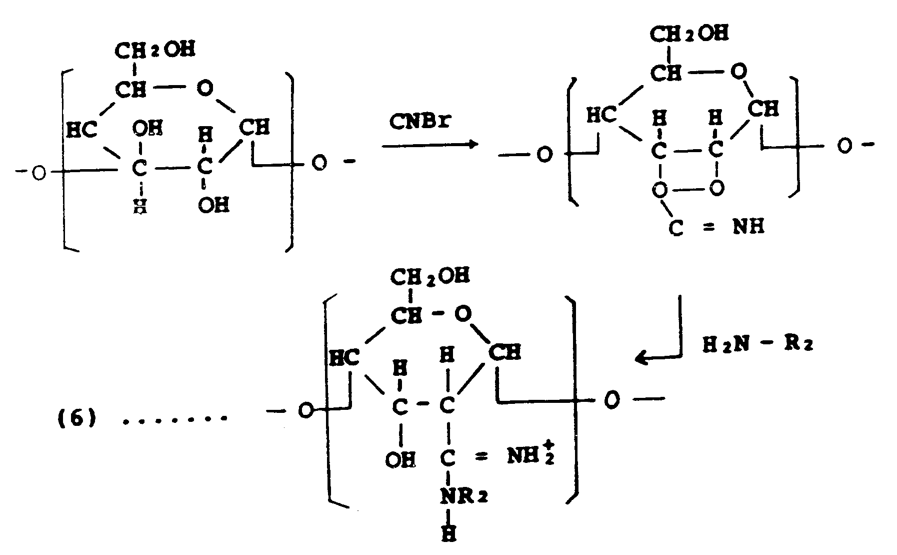

Instead of pullulan, other polysaccharides such as pectin, proteins such as gelatin or casein, or water-soluble polymers, such as polyvinyl alcohol and polyvinyl pyrrolidone may be used to form the thin film of hydrophilic polymer. Any other film-forming material which contains hydroxyl groups in its molecule, such as novolak resins, can also be used for this purpose.

Pullulan which is partially acetylated (degree of replacement 1.5 to 2.5) can also be used in place of pullulan; in this case the film is formed using acetone as solvent.

The photosensitive thin film can also be made using optical cross-linking agents other than ammonium dichromate, such as other dichromates, diazo compounds, such as diazo resin, or diazide compounds, such as 4,4'-diazide-stilbene-2,2'-disulphonic acid sodium salt.

## Claims

1. A sensor comprising a field effect transistor having a gate electrode and a sensing material fixed to the gate electrode, characterised in that the gate electrode surface has a reactive monomolecular film or a thin film of a photosensitive hydrophilic polymer directly thereon and the sensing material is bonded to the film by means of Schiffs base or CNBr induced bonding whereby the sensing material retains its activity.

2. A sensor according to claim 1, characterised in that the sensing material is a protein or an enzyme.

3. A sensor according to claim 1 or 2, characterised in that the reactive monomolecular film is formed from a compound comprising a straight hydrocarbon chain containing up to 25 carbon atoms with a vinyl or acetylene group at one end and a chlorosilane group at the other end.

4. A sensor according to claim 1 or 2, characterised in that the photosensitive hydrophilic polymer contains hydroxyl or carboxylic groups.

5. A sensor according to any of claims 1,2 and 4, characterised in that the bonding between the photosensitive hydrophilic polymer and a sensing material which is a protein or an enzyme is effected through a bond of one of the following formulae: 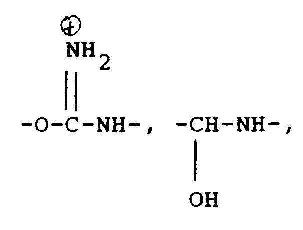 or -CH=N- .

6. A sensor according to any of claims 1,2,4 and 5, characterised in that the photosensitive hydrophilic polymer is derived from a polysaccharide, a protein, or a water-soluble synthetic polymer.

7. A sensor according to claim 6, characterised in that the photosensitive hydrophilic polymer is derived from pectin, casein, polyvinyl alcohol or polyvinyl pyrrolidone.

8. A sensor according to any of claims 1, 2 and 4 to 7, characterised in that the hydrophilic polymer is rendered photosensitive by cross-linking with an optical cross-linking agent which is a dichromate, a diazo compound or a diazide compound.

9. A sensor according to claim 8, characterised in that the optical cross-linking agent is ammonium dichromate, a diazo resin, or 4,4'-diazidestilbene-2,2'-disulphonic acid sodium salt.

10. A method of making a sensor which comprises forming a field effect transistor having a gate electrode on a semiconductor substrate and fixing a sensing material to the gate electrode, characterised by the steps of:
- forming a photoresist layer on said semiconductor substrate except on the portion of said gate electrode;
- forming a reactive monomolecular film on the surface of said gate electrode, said reactive monomolecular film being formed by means of a silane surface active agent comprising a reactive group;
- converting the reactive groups of said silane surface active agent into hydroxyl groups;
- converting the hydroxyl groups into aldehyde groups;
- fixing a sensing material which is a protein or enzyme to the aldehyde groups by means of Schiffs base or CNBr induced bonding; and
- removing said photoresist layer.

11. A method according to claim 10, characterised in that the silane surface active agent is a compound comprising a straight hydrocarbon chain containing up to 25 carbon atoms with a vinyl or acetylene group at one end and a chlorosilane group at the other end, the chlorosilane groups reacting with the gate electrode surface and the vinyl or acetylene groups being converted into aldehyde groups.

12. A method according to claim 10 or 11, characterised in that the monomolecular film is formed on the gate electrode surface by a chemical adsorption process or by a Langmuir-Blodgett process.

13. A method according to claim 10, characterised in that instead of using a photoresist layer to form the monomolecular film on the gate electrode, the monomolecular film is formed all over the substrate of said semiconductor surface and is exposed, except that part on the gate electrode area, to an energy beam which deactivates said reactive monomolecular film.

14. A method according to claim 10, characterised in that instead of forming a monomolecular film on the gate electrode, a thin film of a photosensitive hydrophilic polymer is formed on said semiconductor substrate;
- said thin film of a photosensitive hydrophilic polymer is removed from said semiconductor substrate except at the portion on said gate electrode by using a mask having an opening which corresponds to said gate electrode.
- the hydrophilic groups of said polymer are converted into aldehyde groups and the latter are reacted with the sensing material, or the hydrophilic groups of said polymer are reacted with cyanobromide and then with the sensing material.

## Patentansprüche

1. Sensor, umfassend einen Feldeffekttransistor mit einer Gateelektrode und einem Sensormaterial, das an die Gateelektrode angebracht ist, **dadurch gekennzeichnet**, daß die Oberfläche der Gateelektrode einen reaktiven monomolekularen Film oder einen dünnen Film aus einem lichtempfindlichen hydrophilen Polymer direkt daran hat und daß das Sensormaterial an den Film mittels einer durch eine Schiff-Base oder CNBr hervorgerufenen Bindung gebunden ist, wodurch das Sensormaterial seine Aktivität behält.

2. Sensor nach Anspruch 1, **dadurch gekennzeichnet**, daß das Sensormaterial ein Protein oder ein Enzym ist.

3. Sensor nach Anspruch 1 oder 2, **dadurch gekennzeichnet**, daß der reaktive monomolekulare Film aus einer Verbindung gebildet ist, die eine gerade Kohlenwasserstoffkette, die bis zu 25 Kohlenstoffatome enthält, mit einer Vinyl- oder Acetylengruppe an einem Ende und einer Chlorsilangruppe an dem anderen Ende umfaßt.

4. Sensor nach Anspruch 1 oder 2, **dadurch gekennzeichnet**, daß das lichtempfindliche hydrophile Polymer Hydroxyl- oder Carbonsäuregruppen enthält.

5. Sensor nach einem der Ansprüche 1, 2 und 4, **dadurch gekennzeichnet**, daß die Bindung zwischen dem lichtempfindlichen hydrophilen Polymer und einem Sensormaterial, welches ein Protein oder Enzym ist, durch eine Bindung einer der folgenden Formeln bewirkt wird: 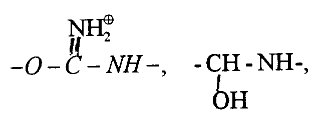 oder -CH=N-

6. Sensor nach einem der Ansprüche 1, 2, 4 und 5, **dadurch gekennzeichnet**, daß das lichtempfindliche hydrophile Polymer von einem Polysaccharid, einem Protein oder einem wasserlöslichen synthetischen Polymer abgeleitet ist.

7. Sensor nach Anspruch 6, **dadurch gekennzeichnet**, daß das lichtempfindliche hydrophile Polymer von Pektin, Kasein, Polyvinylalkohol oder Polyvinylpyrrolidon abgeleitet ist.

8. Sensor nach einem der Ansprüche 1, 2 und 4 bis 7, **dadurch gekennzeichnet**, daß das hydrophile Polymer durch Vernetzen mit einem optischen Vernetzungsmittel, welches ein Dichromat, eine Diazoverbindung oder eine Diazidverbindung ist, lichtempfindlich gemacht wird.

9. Sensor nach Anspruch 8, **dadurch gekennzeichnet**, daß das optische Vernetzungsmittel Ammoniumdichromat, ein Diazoharz oder 4,4'-Diazidstilben-2,2'-disulfonsäure-Natriumsalz ist.

10. Verfahren zum Herstellen eines Sensors, welches das Bilden eines Feldeffekttransistors mit einer Gateelektrode auf einem Halbleitersubstrat und das Fixieren eines Sensormaterials an der Gateelektrode umfaßt, **gekennzeichnet durch** die Schritte:
- Bilden einer Photolackschicht auf dem Halbleitersubstrat außer in dem Bereich der Gateelektrode;
- Bilden eines reaktiven monomolekularen Films auf der Oberfläche der Gateelektrode, wobei der reaktive monomolekulare Film mittels eines oberflächenaktiven Silan-Mittels, welches eine reaktive Gruppe umfaßt, gebildet ist;
- Umwandeln der reaktiven Gruppen des oberflächenaktiven Silan-Mittels in Hydroxylgruppen;
- Umwandeln der Hydroxylgruppen in Aldehydgruppen;
- Fixieren eines Sensormaterials, welches ein Protein oder Enzym ist, an die Aldehydgruppen mittels einer durch eine Schiff-Base oder CNBr hervorgerufenen Bindung; und
- Entfernen der Photolackschicht.

11. Verfahren nach Anspruch 10, **dadurch gekennzeichnet**, daß das oberflächenaktive Silan-Mittel eine Verbindung ist, die eine gerade Kohlenwasserstoffkette, die bis zu 25 Kohlenstoffatome enthält, mit einer Vinyl- oder Acetylengruppe an einem Ende und einer Chlorsilangruppe an dem anderen Ende umfaßt, wobei die Chlorsilangruppen mit der Oberfläche der Gateelektrode reagieren und die Vinyl- oder Acetylengruppen in Aldehydgruppen umgewandelt werden.

12. Verfahren nach Anspruch 10 oder 11, **dadurch gekennzeichnet**, daß der monomolekulare Film auf der Oberfläche der Gateelektrode durch ein chemisches Adsorptionsverfahren oder durch ein Langmuir-Blodgett-Verfahren gebildet wird.

13. Verfahren nach Anspruch 10, **dadurch gekennzeichnet**, daß anstelle der Verwendung einer Photolackschicht zum Bilden des monomolekularen Films auf der Gateelektrode, der monomolekulare Film auf dem gesamten Substrat der Halbleiteroberfläche gebildet wird und mit Ausnahme des Teils in dem Gateelektrodenbereich einem Energiestrahl ausgesetzt wird, der den reaktiven monomolekularen Film desaktiviert.

14. Verfahren nach Anspruch 10, **dadurch gekennzeichnet**, daß anstelle der Bildung eines monomolekularen Films auf der Gateelektrode ein dünner Film aus einem lichtempfindlichen hydrophilen Polymer auf dem Halbleitersubstrat gebildet wird;
der dünne Film aus einem lichtempfindlichen hydrophilen Polymer von dem Halbleitersubstrat mit Ausnahme des Bereichs auf der Gateelektrode entfernt wird unter Verwendung einer Maske mit einer Öffnung, die der Gateelektrode entspricht;
die hydrophilen Gruppen des Polymers in Aldehydgruppen umgewandelt werden und letztere mit dem Sensormaterial umgesetzt werden, oder die hydrophilen Gruppen des Polymers mit Cyanobromid und dann mit dem Sensormaterial umgesetzt werden.

## Revendications

1. Un détecteur comprenant un transistor à effet de champ ayant une électrode de grille et un matériau détecteur fixé sur l'électrode de grille, caractérisé en ce que la surface de l'électrode de grille a un film monomoléculaire réactif ou un film mince d'un polymère hydrophile photosensible directement au-dessus et le matériau détecteur est lié au film au moyen d'une liaison induite par une base de Schiffs ou par le CNBr de sorte que le matériau détecteur retienne son activité.

2. Un détecteur selon la revendication 1, caractérisé en ce que le matériau détecteur est une protéine ou une enzyme.

3. Un détecteur selon la revendication 1 ou 2, caractérisé en ce que le film monomoléculaire réactif est formé à partir d'un composé comprenant une chaîne hydrocarbonée linéaire contenant jusqu'à 25 atomes de carbone avec un groupe vinyle ou acétylène à une extrémité et un groupe chlorosilane à l'autre extrémité.

4. Un détecteur selon la revendication 1 ou 2, caractérisé en ce que le polymère hydrophile photosensible contient des groupes hydroxyles ou carboxyles.

5. Un détecteur selon l'une quelconque des revendications 1, 2 et 4, caractérisé en ce que la liaison entre le polymère hydrophile photosensible et un matériau détecteur qui est une protéine ou une enzyme est effectuée par l'intermédiaire d'une liaison ayant l'une des formules suivantes : 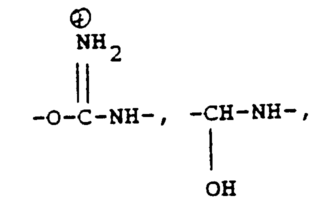 ou -CH=N-

6. Un détecteur selon l'une quelconque des revendications 1, 2, 4 et 5, caractérisé en ce que le polymère hydrophile photosensible est dérivé d'un polysaccharide, d'une protéine ou d'un polymère synthétique soluble dans l'eau.

7. Un détecteur conformément à la revendication 6, caractérisé en ce que le polymère hydrophile photosensible est dérivé de la pectine, de la caséine, de l'alcool polyvinylique ou de la polyvinylpyrrolidone.

8. Un détecteur selon l'une quelconque des revendications 1, 2 et 4 à 7, caractérisé en ce que le polymère hydrophile est rendu photosensible par réticulation avec un agent de réticulation optique qui est un dichromate, un composé diazoïque ou un composé diazide.

9. Un détecteur selon la revendication 8, caractérisé en ce que l'agent de réticulation optique est le dichromate d'ammonium, une résine diazoïque, ou le sel de sodium de l'acide 4,4'-diazidestilbène-2,2'-disulfonique.

10. Une méthode de fabrication d'un détecteur qui comprend la formation d'un transistor à effet de champ ayant une électrode de grille sur un substrat semi-conducteur et la fixation d'un matériau détecteur à l'électrode de grille, caractérisée par les étapes suivantes :
- formation d'une couche de vernis photorésistant sur ledit substrat semi-conducteur à l'exception de la portion de ladite électrode de grille ;
- formation d'un film monomoléculaire réactif sur la surface de ladite électrode de grille, ledit film monomoléculaire réactif étant formé à l'aide par un agent tensioactif du type silane comprenant un groupe réactif ;
- conversion des groupes réactifs dudit agent tensioactif du type silane en groupes hydroxyles ;
- conversion des groupes hydroxyles en groupes aldéhydes ;
- fixation d'un matériau détecteur qui est une protéine ou une enzyme aux groupes aldéhydes au moyen d'une liaison induite par une base de Schiffs ou par le CNBr ; et
- élimination de ladite couche de vernis photorésistant.

11. Une méthode selon la revendication 10, caractérisée en ce que l'agent tensioactif du type silane est un composé comprenant une chaîne hydrocarbonée linéaire contenant jusqu'à 25 atomes de carbone avec un groupe vinyle ou acétylène à une extrémité et un groupe chlorosilane à l'autre extrémité, les groupes chlorosilanes réagissant avec la surface de l'électrode de grille et les groupes vinyles ou acétylènes étant convertis en groupes aldéhydes.

12. Une méthode selon la revendication 10 ou 11, caractérisée en ce que le film monomoléculaire est formé sur la surface de l'électrode de grille par un procédé d'adsorption chimique ou par un procédé de Langmuir-Blodgett.

13. Une méthode selon la revendication 10, caractérisée en ce qu'au lieu d'utiliser une couche de vernis photorésistant pour former le film monomoléculaire sur l'électrode de grille, le film monomoléculaire est formé sur tout le substrat de ladite surface semi-conductrice et est exposé, sauf la partie de la surface de l'électrode de grille, à un faisceau d'énergie qui désactive ledit film monomoléculaire réactif.

14. Une méthode selon la revendication 10, caractérisée en ce qu'au lieu de former un film monomoléculaire sur l'électrode de grille, un film mince d'un polymère hydrophile photosensible est formé sur ledit substrat semi-conducteur ;
- ledit film mince d'un polymère hydrophile photosensible est éliminé dudit substrat semi-conducteur à l'exception de la portion de ladite électrode de grille en utilisant un masque ayant une ouverture qui correspond à ladite électrode de grille.
- les groupes hydrophiles dudit polymère sont convertis en groupes aldéhydes et ces derniers sont mis à réagir avec le matériau détecteur, ou bien les groupes hydrophiles dudit polymère sont mis à réagir avec le bromure de cyanogène et ensuite avec le matériau détecteur.
